# EUROPEAN PATENT APPLICATION

(11) **EP 1 967 886 A1**
(43) Date of publication of application: **10.09.2008**
(21) Application number: 06843715.1
(22) Date of filing: 26.12.2006
(51) Int. Cl.: G02B 21/00, G01N 21/64

(54) **DEVICE AND METHOD FOR CAPTURING IMAGE OF A SAMPLE ORIGINATING FROM ORGANISM**

(30) Priority: 27.12.2005 JP 2005376163; 28.12.2005 JP 2005380450
(71) Applicant: Olympus Corporation, Tokyo 151-0072 (JP)
(72) Inventor: AKIYOSHI, Ryutaro, Tokyo 151-0072 (JP); SUZUKI, Hirobumi, Tokyo 151-0072 (JP); FUKUOKA, Morinao, Tokyo 151-0072 (JP)
(74) Representative: von Hellfeld, Axel
(86) International application number: PCT/JP2006/326342
(87) International publication number: WO 2007/074929

(57) **Abstract**

A novel apparatus and a novel method of imaging a luminescence phenomenon of a sample of biological origin using an optical image formation device are provided. In the inventive method and apparatus, an illumination image acquired by illuminating the sample and a luminescence image acquired with the light emitted by a luminescence phenomenon of a cell in the sample without illuminating it are superposed to generate a superposition image. In the superposition image, an analysis region is determined. Thereby, even when the light detected in a luminescence observation is feeble, a luminescent cell and/or a luminescent site in a cell in a sample can be specified.

## Description

### Technical field

This invention relates to a method and an apparatus of imaging feeble light emitted from a sample (or a specimen) of biological origin, such as a cell, a bacterium, and other biological samples, more specifically, to a method and an apparatus for observation and various measurements of such a sample through the imaging of feeble light caused by a bioluminescence phenomenon.

### Background art

In recent years, techniques of imaging a sample of biological origin, such as a cell, with a fluorescent protein, e.g. GFP, and/or a luminescent protein, e.g. luciferase, aequorin, expressed in an arbitrary cell through gene transfer, have become increasingly employed for the research in the life science field. The fluorescence or luminescent protein can be expressed while being fused with another arbitrary certain protein within a cell (protein marking), and, if a fluorescent or luminescent protein coding gene is inserted into or replaced with the downstream side of a specific genetic regulatory region, the fluorescent or luminescent protein will be expressed only upon the activation of the specific genetic regulatory region. Thus, so far, it has been tried to make a fluorescent or luminescent protein expressed together with an expression of a protein or an activation of a genetic region to be observed in various biological phenomena occurring the in and/or outsides of a cell, and to use such a fluorescent or luminescent protein as a reporter molecule or a probe molecule in the imaging with an optical microscope for monitoring and/or detecting when and how the protein or genetic region to be observed is expressed and/or how the resultant expressed protein behaves in the in- and outsides of the cell.

Fluorescent proteins, such as GFP, are relatively stable within a cell and the fluorescence emitted therefrom is bright, and thus those proteins have been already being widely employed in order to stably and easily execute the imaging of intracellular structures (for example, see Mason (1999), Fluorescent and luminescent probes for biological activity, Second edition.). On the other hand, luminescent proteins, such as luciferase, emit light through a chemical luminescence and/or a bioluminescence phenomenon without the excitation light for exciting a fluorescent dye (The excitation light is often harmful to cells or other biological samples.). Thus, the luminescent proteins are expected for one of probes for imaging a biological sample without damaging it during observation under an optical microscope, and some examples of the imaging techniques of employing such luminescent proteins have been already reported. For instance, Rutter, et al. observed that MAP kinase was involved in insulin signalling through the imaging of the gene expression of luciferase in a single living cell using a photon counting camera (Rutter, White, Tavare (1995) "Involvement of MAP kinase in insulin signalling revealed by non-invasive imaging of luciferase gene expression in single living cells. Current biology Vol. 5: 890-899.). Sternberg, et al. also reported the detection of bioluminescence, using a photon counting camera and a cooling CCD camera (Sternberg, Eberl, Kongsbak, Molin (1997), "Detection of bioluminescence from individual bacterial cells: a comparison of two different low-light imaging system. J. Bioluminescence and Chemiluminescence Vol. 12: 7-13.). Further, Takasuka, et al. reported that a dynamic change in an activation of a prolactin promoter was observed by the imaging of the gene expression of luciferase in a single living cell with a photon counting camera (Takasuka, White, Wood, Robertson, Davis (1998), "Dynamic changes in prolactin promoter activation in individual living lactotrophic cells.", Endocrinology vol.139: 1361-1368.).

As noted, in imaging the above-mentioned fluorescent and/or luminescent proteins genetically expressed within a cell, the fluorescence of the fluorescent proteins is relatively bright so that a relatively clear microscopic image of their fluorescence can be acquired by means of a conventional optical microscope equipped with an imaging system. However, the luminescence intensity of the luminescent protein from a cell or other biological samples (hereafter referred to as "cells, etc".) is, in general, very weak or feeble, so that it is very difficult to acquire a microscopic image of the luminescence with a camera and an imaging system for a normal microscopic image (Indeed, usually, the luminescence of luminescent proteins cannot be observed by human eyes.). Thus, in a conventional system for the imaging of luminescent proteins, a camera or an image capturing device specialized for detecting feeble lights, such as a super-high sensitivity camera or a photon counting camera, is attached to an optical microscope (Even with such a super high sensitive camera, however, it is required to integrate light from a sample on the light receiving surface of the camera for at least several to several tens of minutes in order to produce one image.).

By the way, in fluorescence or luminescence observation under an optical microscope, the light appearing in a microscopic image is principally only the light emitted from proteins. Accordingly, in a sample, a condition or a morphology in a region where no protein exists is not observable. In the case of the observation of fluorescent proteins, however, it is possible that morphologies or conditions of cells, etc. may become observable because of their relatively bright fluorescence and the emission of autofluorescence from materials other than the fluorescent proteins in the inside of cells, etc. due to the application of excitation light. On the other hand, in the case of the luminescence observation of luminescent proteins, the light from a sample, such as the luminescence from luminescent proteins, is too feeble to generate an image unless it is integrated for several minutes to several tens of minutes, and, in a condition that no light is emitted from any materials other than the luminescent proteins, the positions, morphologies and these change of cells, etc. in a sample can hardly be grasped (It could not be known whether or not a cell exists in a region where no light appears.). Moreover, during the observation, especially observing a sample of living cells, etc. for a long period, the luminescence intensity may vary, and/or cells may move or deform, and therefore, it is very difficult to determine which cell or which portion in a cell luminesces. For instance, it was very difficult to analyze the change of luminescence phenomena in a cytoplasm and a nerve projection of a certain nerve cell.

In some prior art, in order to observe positions and morphologies of cells, etc., a transmitted light observation is performed together with a luminescence observation of luminescent proteins. In this case, however, the amounts of the light on the light receiving surface of a camera in the transmitted light observation and luminescence observation extremely differ from each other. So, for the transmitted light observation and luminescence observation, different cameras are used (different objectives may also be used), and thereby a luminescence image (an image of the light from luminescent protein) and an illumination image (an image with a transmitted light) will be generated with different cameras, respectively. Accordingly, the microscopic image showing the morphologies of cells, etc. and the microscopic image showing a distribution of luminescent proteins are created on difference images, which makes it difficult to precisely determine the actual distribution or positions of luminescent proteins in a sample (Often, the sizes and/or positions of the fields of view of cameras for the transmitted light observation and luminescence observation can be shifted from one another, and in such a case, the determination of the actual distribution or positions of luminescent proteins in a sample will become more difficult.). Further, when many cells are observed at one time, it is not easy to find the correspondences of cells luminescing in a luminescence image to cells in an illumination image.

In the "luminescence imaging" using luminescent proteins as described above, if the distribution of luminescent proteins in a sample can be detected or defined while the morphologies and/or conditions of cells, etc. in the same sample are grasped, the range of the application of "luminescence imaging" will be widen and it will become useful in the analysis, etc. for reactions involved with various biological processes, etc. As noted, however, in the prior art, by the reasons that the light of luminescent proteins is feeble and that no light appears in a region including no luminescent protein in a sample, it is very difficult to obtain information of where in a certain cell, and/or in which cells in a sample, luminescent proteins are expressed although the detection of the presence or absence of the expressions of luminescent proteins in the sample may be possible. Actually, by means of a super high-sensitive image detecting element, the detection of the feeble luminescence can be performed, but, in this case, the acquirable images are only mosaic images, and therefore it is difficult to perform a detail analysis while defining an area in which the amount of luminescence is to be measured.

### Disclosure of Inventions

Thus, one of the objects of the present invention is to provide an apparatus and a method for the imaging of a cell and/or other biological samples with feeble light generated by a bioluminescence phenomenon as described above, wherein a luminescence image of cells, etc. is acquired in a manner that a luminescent cell and/or a site in a cell can be determined.

Another object of the present invention is to provide such an apparatus and a method, which enable the acquisition of data from a specific area and the use thereof in various analyses of phenomena in cells.

According to one aspect of the present invention, an apparatus of acquiring an image of a sample of biological origin by means of an optical image formation device is characterized in that the apparatus comprises: an illuminating portion which illuminates the sample; an illumination image acquisition portion which acquires an illumination image of the sample; a luminescence image acquisition portion which acquires a luminescence image of a cell in the sample; and an image processing portion which superposes the illumination image and luminescence image to generate a superposition image and determines or specifies a region to be analyzed in the superposition image. In this structure, typically, the optical image formation device may be an optical microscope. In that case, an illumination image is a transmitted light microscopic image obtained by carrying out a transmitted light observation under the optical microscope using illumination light from the illuminating portion, and the luminescence image is a luminescence microscopic image obtained by observing light emitted by an intracellular luminescence phenomenon under the optical microscope. The illumination image acquisition portion and the luminescence image acquisition portion preferably comprise a common microscopic image capturing device, by means of which both of the transmitted light microscopic image and the luminescence microscopic image are captured.

According to the above-mentioned structure, a luminescence image obtained through observing a luminescence phenomenon in a cell of a sample is superposed with an illumination image obtained by illuminating the sample, so that morphologies and/or conditions of cells, etc. therein are rendered to be observable, and thereby, a luminescent site of a cell in the luminescence image can be located in the sample and/or in the cell more precisely than ever. Especially, when an illumination image (transmitted light microscopic image) and a luminescence image (luminescence microscopic image) are acquired with a common microscopic image capturing device, the superposing of the images advantageously becomes very easy. Even if many cells having similar morphologies lie in an observed region, which cell is luminescing therein can be immediately determined by seeing the resultant image from the superposing of a luminescence image onto an illumination image showing morphologies of cells in a sample, and accordingly, a region to be seen in an image, namely, a region to be monitored in an analysis of luminescence phenomena, etc. (an analyzed region) will be easily found. Further, a condition of a sample can be grasped in an illumination image, so, even when a cell moves and/or deforms, it can be easily judged which cell, where or how, moves and/or deforms, and correspondingly, how the luminescence varies can be easily found. Moreover, although discriminating the overlapping of a plurality of cells which occurs contingently on a density of cells in a sample is difficult only by viewing a luminescence image, in accordance with the structure of the present invention, it is possible to specify a region having an appropriate cell density and subsequently to judge the presence or absence of the overlapped cells, thereby allowing more precise analysis of luminescence amounts.

In the inventive apparatus, as described above, a transmitted light microscopic image and a luminescence microscopic image to be superposed with one another are preferably captured with a common microscopic image capturing device. In this regards, according to the investigation of the applicant of the present application, it has been shown that, when an objective and a lens assembly of an optical microscope that form an image of a sample on a light receiving surface of a microscopic image capturing device are designed such that the square value of the ratio (NA/*β*) of the numerical aperture of the objective (NA) to the magnification power (*β*) of the image of the sample projected on the light receiving surface is rendered to be 0.01 or above, an image is creatable only from the luminescence emitted from a single cell even with an image capturing device, such as a CCD camera (See Japanese Patent Application No. 2005-267531). Furthermore, this imaging condition, surprisingly, may be considered to be applicable for the imaging of all biologically derived samples that have been difficult to be imaged in the past, and it has been found that an image of cells, etc. can be acquired for a short time duration (e.g. 20 minutes) even with luminescence components, such as bioluminescence, feeble and invisible directly by eyes under an optical microscope. In addition, in accordance with the optical conditions investigated by the inventors, it has been found out that, when the above-mentioned optical condition indicated by a square value of a numerical aperture of an objective of an image capturing device (NA) /a magnification power in projecting an image (β) is 0.071 or above, the imaging can be performed in a short time of within 1 to 5 minutes, enabling the acquisition of an image of cells, etc. which is usable even in an image analysis. Accordingly, in an embodiment of an apparatus of the present invention, by setting up a light receiving surface of a microscopic image capturing device, an objective, and a lens assembly so as to render the square value of its NA/β to be 0.01 or above, more preferably, 0.071 or above, a better superposition image of a transmitted light microscopic image and a luminescence microscopic image can be created.

Moreover, in the apparatus of the present invention, a fluorescence image acquiring portion for acquiring a fluorescence image of a cell may be further provided. When the optical image formation device is an optical microscope, a fluorescence image will be a fluorescence microscopic image obtained by carrying out a fluorescence observation of a sample with the optical microscope. In this case also, a fluorescence microscopic image and a luminescence microscopic image may be obtained with a common microscopic image capturing device. As well known by one of ordinary skilled in the art, in the fluorescence observation, various intracellular reactions are detectable by using various fluorescent dyes having a sensitivity to an environmental condition, such as pH sensitive, Ca concentration sensitive or membrane potential sensitive dye, etc. Thus, it should be understood that combining a fluorescence image obtained in such a fluorescence observation with a luminescence image may enable the revealing of the relation between a luminescent site in a cell and various intracellular phenomena. It is important to note that a spatial relationship between a morphology of a cell, etc. and a luminescent site in a sample can be easily grasped by the superposing of an illumination image and a luminescence image, and, in accordance with this feature, the usefulness of combining a fluorescence image with a luminescence image will be further increased.

In one embodiment of the inventive apparatuses, the display portion which displays a superposition image may be provided to allow a user to easily view a luminescent site in a sample or in a cell on the display portion. Further, in the inventive apparatus, a recording portion which records a superposition image may be provided for the purposes of the analysis of an image and the display thereof.

By the way, as already noted, in an observation of a luminescence of a cell, especially, in the imaging of a luminescence of a luminescent protein expressed by transgenetics, such as luciferase, aequorin, a gene of a luminescent protein is introduced into a cell such that the corresponding luminescent protein will be expressed while being fused with an arbitrary protein (of an object to be monitored), or, the gene will be replaced with, or inserted into, the downstream side of a genetic regulatory region, and thereby the resultantly expressed luminescent protein will be used as a reporter molecule for probing when and where the arbitrary objective protein in the measurement is expressed. In this connection, a protein to be reported by a luminescent protein is often expressed in a cell when the cell receives one of various stimuli. Thus, in one embodiment of the inventive apparatus, a cell stimulus feeding portion which gives an arbitrary stimulus to a cell may be provided. The cell stimulus feeding portion, for instance, may comprise at least one of portions selected from the group including a reagent feeding portion which supplies a reagent to a cell, a temperature adjustment portion which adjusts the temperature of a sample, and a gas feeding portion which supplies gas to a cell.

Furthermore, in one embodiment, the inventive apparatus as described above may be an apparatus for acquiring an image of a sample of biological origin, comprising an optical microscope; a microscopic image capturing device which captures a microscopic image observed with the optical microscope; and, an image processing device which takes in the microscopic image as image data and performs an image processing, characterized in that the image processing device comprises an image superposing portion which generates a superposition image by superposing a transmitted light image, which is obtained by capturing an image of the sample with the microscopic image capturing device in a transmitted light observation of the sample under the optical microscope, and a luminescence image, which is obtained by capturing light emitted by an intracellular luminescence phenomenon in the sample with the microscopic image capturing device; and an image region specifying portion which specifies an analysis region in the superposition image. In this apparatus, preferably, the microscopic image capturing device has a light receiving surface, and the optical microscope comprises an objective and a lens assembly which forms an image of the sample on the light receiving surface of the microscopic image capturing device, wherein an optical system of the optical microscope is constructed so as to render a square value of a ratio of a numerical aperture of the objective to a magnification power in projecting the image of the sample on the light receiving surface to be 0.01 or above.

According to another aspect of the present inventions, there is provided a method of acquiring an image of a sample of biological origin with an optical image formation device, comprising steps of: illuminating the sample and acquiring its illumination image; acquiring a luminescence image of light emitted by a luminescence phenomenon of a cell in the sample without illuminating the sample; superposing the illumination image and luminescence image to generate a superposition image; determining an analysis region in a superposition image. According to this inventive method, as in the inventive apparatus as described above, it is enabled to generate a superposition image of a illumination image and a luminescence image, and thereby to perform the analysis of a luminescence phenomenon in a manner that a region where luminescence is found is grasped in a cell or in a sample appearing in the illumination image. In this regard, the inventive method can be performed with the above-mentioned inventive apparatus, but may be performed with other arbitrary apparatus. Further, also in the inventive method, a step of acquiring a fluorescence image of a cell in a sample, as well as a luminescence image and an illumination image, may be performed, and accordingly, it is enabled to associate a luminescence phenomenon with information obtained from the fluorescence while grasping where the luminescence phenomenon takes place in a cell or in a sample.

In the above-mentioned inventive method, as in the inventive apparatus, the optical image formation device may be an optical microscope. In this case, the illumination image is a transmitted light microscopic image obtained by carrying out a transmitted light observation under the optical microscope, and the luminescence image is a luminescence microscopic image obtained by observing a luminescence phenomenon in a cell of the sample under the optical microscope, wherein it is preferable that the transmitted light microscopic image and the luminescence microscopic image are captured by a common microscopic image capturing device. Moreover, in the optical microscope, preferably, an objective and a lens assembly which form an image of a sample on a light receiving surface of the microscopic image capturing device is designed so as to render a square value of a ratio of a numerical aperture of the objective to the magnification power of the image of the sample projected on the light receiving surface to be 0.01 or above.

In an embodiment, for instance, during imaging a luminescence phenomenon for a long time, the steps of illuminating a sample and acquiring an illumination image is performed multiple times, so that the change of morphology and/or movement of the position of a cell, etc. in a sample may be checked arbitrarily. Further, when a cell to be observed incorporates, in its intracellular genes, a gene of a luminescent protein which is expressed by providing to a cell a certain specific stimulus, for example, a reagent stimulus, an electric stimulus, a gaseous stimulus or a thermal stimulus, a step of selectively providing to the cell at least one of stimuli as listed may be performed prior to the steps of acquiring an illumination image and a luminescence image (or additionally a fluorescence image). In that case, for the purpose of checking the condition before providing the stimulus, preferably, a step of acquiring an illumination image and a luminescence image of a cell may be performed prior to the step of providing the stimulus to the cell.

Moreover, after the acquisition of a series of the above-mentioned various images and the step of the superposing of an illumination image and a luminescence image, a step of displaying and/or recording the superposition image of the illumination image and luminescence image may be performed for the purposes of allowing a user to check the images and/or later executing an arbitrary processing thereof.

Also, optionally, after an analysis region is specified, in order to check or observe the condition of the analysis region in detail, there may be performed a step of displaying at least two of a region of the illumination image corresponding to the analysis region, a region of the luminescence image corresponding to the analysis region and a region of the fluorescence images corresponding to the analysis region (when the fluorescence image is also acquired). In the analysis of a luminescence phenomenon, a step of measuring the light intensity of the region of the luminescence image corresponding to the analysis region and a step of displaying a change of the light intensity may be performed.

As understood from the above-mentioned explanation, in the luminescence imaging, in general, a condition of a region where no luminescent proteins exist in a sample is inherently unobservable, and further the light observed in an image capturing device or a camera is very feeble, and therefore, even if the luminescence phenomenon by a luminescent protein is detectable, it has been difficult to grasp correctly where the luminescence phenomenon occurs in the sample. In accordance with the apparatus and method of the present inventions, an image obtained by superposing an illumination image and a luminescence image is generated, so that the analysis of a luminescence phenomenon can be performed while where the luminescence occurs in the sample has been grasped. According to the feature of the present invention, since a luminescent cell and a non-luminescent cell respectively can be immediately determined from the superposition image of an illumination image and a luminescence image, it also becomes possible to perform an arbitrary statistical analyses for the number of cells in which luminescence was observed and the number of cells in which no luminescence was observed. Moreover, an observation with time for monitoring the luminescence intensity of only a luminescent cell can be performed very easily as compared with the prior art. For instance, even when cells move in a sample during a measurement, it is possible to track a luminescent cell in a superposition image of an illumination image and a luminescence image. In the past, when increasing the magnification power of an objective of a microscope, the signal from a luminescent site relatively decreases owing to the increase of the magnification power of the objective, and thus, the luminescent site might be missed. However, according to the present invention, since a luminescent site in a sample can be determined in a superposition image of an illumination image and a luminescence image, a failure, such as missing a luminescent site, is also reduced.

It can be said that the present invention as described above increases the usefulness of the luminescent proteins in the imaging of a cell and/or other biological samples. According to the present invention, it is expected that various experiments, measurements and analyses with respect to expressions of intracellular various proteins, which have been performed only with a spectroscopy using a luminescent protein for a reporter molecule in the past, can be performed with the imaging in which individual cells are identified.

Other purposes and advantages of the present invention will be in part apparent and in part pointed out hereinafter.

### Brief Description of the Drawings

Fig. 1A is a schematic diagram showing the outline of the structure of the first embodiment of a feeble light measuring apparatus including an inverted optical microscope in accordance with the present invention, and Fig. 1B is a schematic diagram showing more in detail the structure around a sample container of Fig. 1A, comprising a device of feeding a stimulus to a cell in a sample.
Fig. 2A shows the structure of a computer 80 (image processing device) of a feeble light measuring apparatus in the form of a functional block diagram, and Fig. 2B is a schematic diagram of a console panel connected to the computer 80.
Fig. 3 shows, in a form of a flow chart, the steps of a method of acquiring an image of a sample of biological origin in accordance with the present invention, which can be performed by means of the feeble light measuring apparatus of the present invention.
Fig. 4 is a drawing schematically showing the periodic change of a luminescence intensity to be observed in a NIH3T3 cell, wherein a plasmid, prepared by connecting a luciferase gene to an expression vector having a clock gene incorporated therein, is made expressed. At the time (a) when luminescence becomes very feeble in a 24 hour cycle, it becomes impossible to acquire the image of the luminescence.
Fig. 5 is a schematic diagram of the structure (the optical system) of the second embodiment of the feeble light measuring apparatus of the present invention which performs a simultaneous measurement of fluorescence and bioluminescence.
Fig. 6 is a schematic diagram of the structure (the optical system) of the third embodiment of the feeble light measuring device of the present invention which simultaneously performs a measurement of fluorescence and bioluminescence and an image expansion with a digital zoom and an optical zoom, respectively.
Fig. 7 are drawings explaining about conditions of molecules expected in a plasmid to be introduced into a Hela cell used as a sample of Example 1, in which plasmid a luciferase gene is connected to an expression vector having a tetracycline operator (TetO2). As shown in Fig. 7A, when a TetR homodimer combines with a TetO2 region, the luciferase gene connected to TetO2 region is not expressed. On the other hand, when tetracyclines are given to the cell, the TetR homodimer structurally changes and separates from the Tet02 region as seen in Fig. 7B, leading to the expression of a luciferase.
Fig. 8 is a drawing which shows the times of the addition of tetracycline and the exposures for an illumination image and a luminescence image in Example 1.
Figs. 9A, 9B and 9C each show an illumination image, a luminescence image acquired in Example 1 and a resultant image of the superposition of the illumination image of Fig. 9A and the luminescence image of Fig. 9B (an expanded image within the frame of Fig. 9A). In Fig. 9C, the square frames indicated as ROI-1 and ROI-2 are the regions specified for analysis regions.
Fig. 10 is a graph showing the variations with time of the luminescence intensities (of HeLa cells) in the analysis regions specified in Fig. 9C.
Figs. 11A, 11B and 11C each show an illumination image, a luminescence image acquired in Example 2, and a resultant image of the superposition of the illumination image of Fig. 11A and the luminescence image of Fig. 11B. Luminescent sites are displayed by false color in an actual apparatus, but, in Fig. 11C, they are shown in white.
Fig. 12 is a graph showing the variation with time of the luminescence intensity of the luminescent bacterium in region PP-1 in Fig. 11.
Figs. 13A, 13B and 13C each show an illumination image, a luminescence image, acquired in Example 3, and a resultant image of the superposition of the illumination image of Fig. 13A and the luminescence image of Fig. 13B.
Figs. 14 are superposition images (left) and illumination images (right) showing the movement of a luminescent bacterium with time progress in Example 3.
Fig. 15 is a graph of the variation with time of the luminescence intensity of the luminescent bacterium (V. t.) in Example 3.

### Best Modes of Embodiments of the Invention

In the followings, the present inventions are explained about in detail with respect to several preferred embodiments referring to the accompanying drawings, in which the same reference numerals indicate the same parts.

### First Embodiment of an Apparatus of the Present Inventions

### Structure of an apparatus

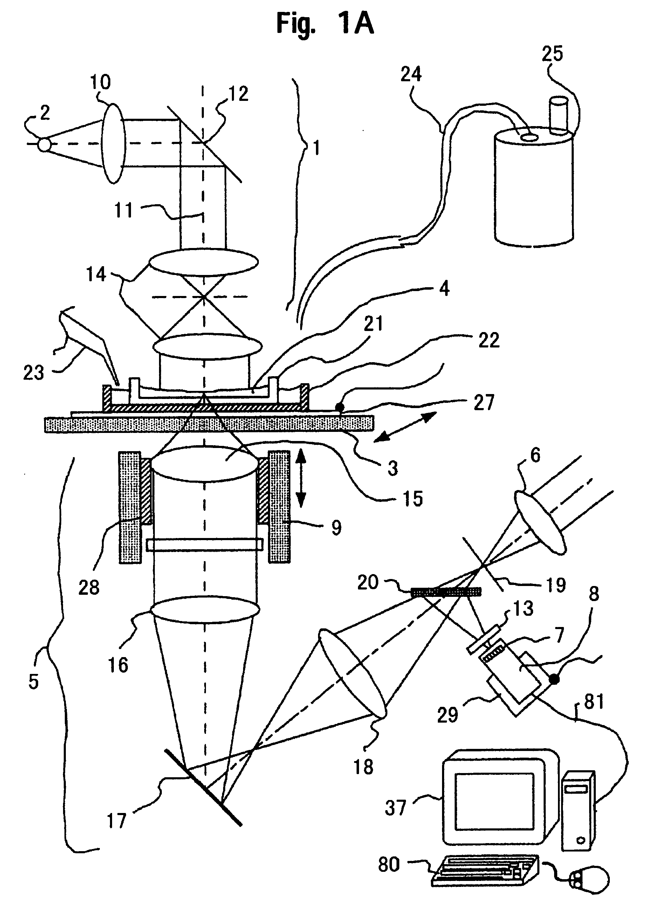

Fig. 1A is a schematic drawing of the first embodiment of a preferable apparatus in accordance with the present invention, which acquires an image of a sample of biological origin for measuring feeble light produced by a bioluminescence phenomenon, and performs the imaging of a cell and/or other biological samples. (called as a "feeble light measuring apparatus", hereafter.)

Referring to the drawing, the inventive feeble light measuring apparatus comprises an inverted microscope including a light source 2, an illumination optical system 1 making light emitted from the light source 2 into a parallel beam and leading the resultant beam to a sample 4, an observation optical system 5 for forming an image of the sample 4 and an eyepiece 6 for expanding the image of the sample 4 for an eye observation thereof; a CCD camera 8 (an image acquisition portion or a microscopic image capturing device) which has an image sensor 7 for capturing the microscopic image of the sample 4; and a computer 80 (an image processing portion or an image processing device) having a TV monitor 37, to which computer the CCD camera 8 is connected by a signal cable 81.

### The structure of the optical microscope

The structure of the above-mentioned optical microscope may be a normal inverted microscope, in which the illumination optical system 1 is constructed with a collector lens 10, a deflection mirror 12 for deflecting an optical axis 11 of an illuminated light and a condenser lens 14 in said order starting from the light source 2. The light source 2 may be a source of an incoherent light having a wavelength in a visible range, such as a halogen lamp, an LED light source, a tungsten lamp, a mercury lamp, etc. In addition, light emitted from a coherent light source, such as a laser, and converted into incoherent light with a Diffusion plate, etc. may also be used for the light source 2. Although the wavelength of the light source is normally in a visible light range, infrared light may also be used.

The observation optical system 5 is constructed with an objective 15 for forming an image of the sample 4, a first relay lens 16, a deflection mirror 17 for deflecting the light from the objective 15 and a second relay lens 18, cooperating with the first relay lens 16 to form the image from the objective 15 (the image of the sample 4) on an image-formation plane. Between the second relay lens 18 and image-formation plane 19, a change-over mirror 20 may be mounted for enabling one to arbitrarily change the way of observation of the image of the sample 4 between an eye observation through the eyepiece 6 and an observation with the CCD camera 8. In this connection, for the change-over mirror 20, instead of the use of that of a mechanical change-over type, a half mirror may be used to divide the optical path into two.

In a transmitted light observation of the sample in the above-described structure, the sample 4 is illuminated by Koehler illumination as in a case of a transmitted light observation with a normal optical microscope. Accordingly, the light from the light source 2 is first turned into a parallel beam by the collector lens 10, and led to illuminate the sample 4 while the image of the light source 2 is formed in the pupil position of the condenser lens 14. Then, the light which has illuminated the sample 4 is passing through the sample 4 into the objective 15 to form an image of the sample on the image formation plane 19 by means of the first relay lens 16 and second relay lens 18, and the resultant image of the sample 4 on the image formation plane 19 is observed with the eyepiece 6 by an observer. Further, when capturing the image of the sample 4 with the CCD camera 8, the light which has been passing through the second relay lens 18 is reflected on the change-over mirror 20, and thereby the image of the sample 4 is formed on the image sensor 7 of the CCD camera 8. In this connection, the magnification power of the objective may be, for example, 20 times.

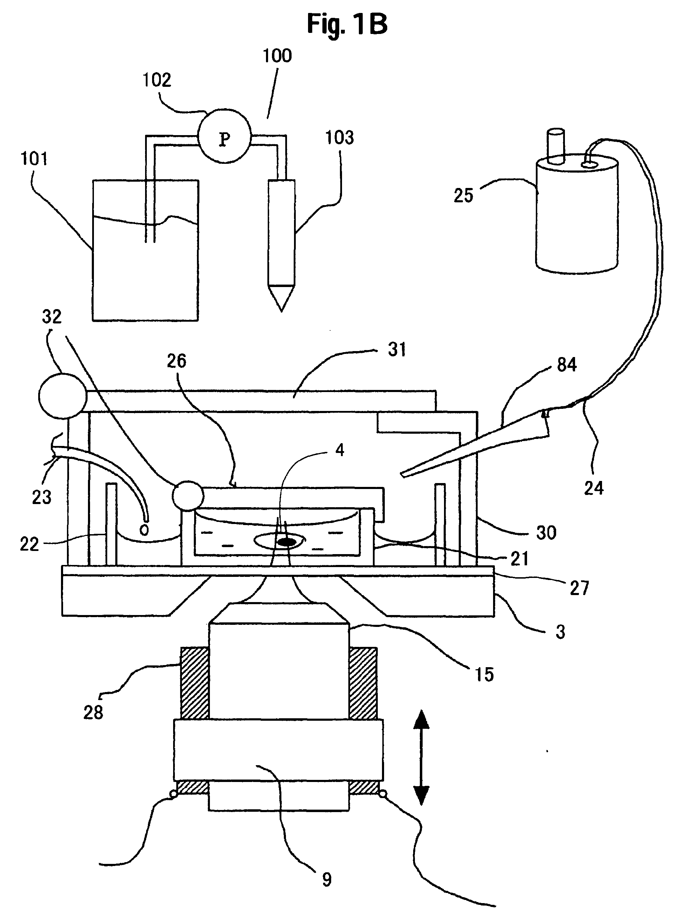

As illustrated in the drawing, the sample 4 is laid on a sample stage 3, on which, preferably, as shown in Fig. 1B in detail, the sample 4 may be put into a sample container 21, such as a laboratory dish having a lid 26, together with culture medium. The bottom of the sample container 21 is made of a material having the same characteristics as an optically transparent cover glass having a thickness of 0.17 mm for microscopes so that a sample on the bottom of the sample container 21 is observable with a normal objective (In this connection, the sample container 21 is not limited to such a laboratory dish, and, instead, a slide glass, a micro plate, etc. may be used.). Further, in order to maintain the humidity in the sample container 21, the sample container 21 is positioned within a water bath 22 to which pure water is supplied through a nozzle 23, and further held in a lidded closed container 30 together with the bath 22. Then, as shown in detail in Fig. 1B, CO₂ gas is supplied onto the upper surface of the bath 22 through a gas supply tube 24 and a CO₂ nozzle 84 from a gas cylinder 25, seated in the exterior of the measuring device. Gas in the gas cylinder 25 is, for example, mixed gas of 5% CO₂ and 95% O₂. The flow velocity of the CO₂ gas supplied into the lidded closed container 30 may be at about 50 mL/min. Additionally, a heat plate 27 may be laid under the sample container 21. The heat plate 27, in typical, adjusts a temperature in the sample container by the stepped intervals of 0.5 °C with a temperature controller (not shown).

Also, as explained later, in order to carry out an experiment of generating a luminescence phenomenon (making a luminescent protein expressed) through giving a stimulus to a cell, an automatic dispensing device 100 may be set up as an apparatus giving a stimulus to a cell. In the automatic dispensing device 100, a pump 102 takes in a reagent solution from a reagent container 101 and discharges a predetermined amount of the reagent solution to the sample container 21 with a nozzle 103. As seen in the drawing, when the sample container 21 is put into in the lidded closed container 30, preferably, the lid 31 of the closed container 30 and the lid 26 of the sample container are opened by means of a motor (not shown) in harmony with the operation of the automatic dispensing device 100 prior to a discharge of a reagent solution from the nozzle 103, and after the discharge of the solution, the lid 31 and the sample container lid 26 are closed with the motor. In this regard, under the control of the computer explained later, the automatic dispensing device 100 may be operated before and after acquisition of a microscopic image and/or at an arbitrary time in between.

Furthermore, in the sample stage 3, preferably, in order to arbitrarily move the sample stage 3 horizontally (in an X direction and a Y direction), two stepping motors (not shown) are separately mounted in the respective directions of 90° from each other. The two stepping motors may be driven by means of a sample stage controller (not shown) based on instructions of the computer 80, enabling automatic positioning control of the sample stage 3.

In addition, preferably, around the objective 15 positioned under the sample stage 3, an objective heater 28 may be mounted to be in contact with the objective 15, so that the temperature of the objective 15 can be adjusted by the stepped intervals of 0.5 °C under control of a temperature adjusting device (not shown) with the objective heater 28 so that the objective 15 will be externally maintained at an arbitrary temperature. Also, around the objective heater 28, there is equipped with an "Z-axis objective driving mechanism 9" enabling automatic movement of the objective 15 along Z-axis (the direction of an optical axis). The Z-axis objective driving mechanism 9 moves the objective 15 up- and downwardly by means of a rack and pinion mechanism (not shown). The operation of rotating a knob of the rack and pinion mechanism is performed with a computer-controlled stepping motor (not shown). Alternatively, the Z-axis objective driving mechanism 9 may be a frictional roller mechanism.

### The structure of the microscopic image capturing device

In the CCD (Charge Coupled Device) camera 8 for receiving an image of the sample 4, the image sensor 7 therein may have the number of pixels of 1,360 x 1,024, for instance. In the inventive device, as described later, the CCD camera 8 captures both the transmitted light microscopic image, obtained in a transmitted light observation of the sample 4, and the luminescence microscopic image, obtained in a luminescence observation of the sample 4, namely, in observing feeble light emitted owing to a luminescence phenomenon in a cell in the sample 4. Thus, for the CCD camera 8 as a photo detector for capturing the feeble light in the luminescence observation, the one having as a high sensitivity as possible is preferably selected. Accordingly, preferable for the CCD camera 8 is a cooled CCD equipped in the bottom portion thereof with a cooling system 29 having a Peltier device, which enables cooling the temperature of the camera into the range of +5 °C to -70 °C for suppressing the dark current emitted from the CCD camera 8. In addition, it is preferable that, above the light receiving surface of the CCD camera 8, an infrared cut filter 13 is mounted to cut off an infrared radiation which would be a background light. An image captured with the CCD camera 8 is transmitted through a signal cable 81 to the computer 80 and displayed on a TV monitor 37 connected thereto. Further, the CCD camera 8 may be a 3 board type color camera capable of capturing a colored illumination image. For an image capturing device of a microscopic image, for instance, a CMOS image sensor, an SIT camera, etc. may be employed.

### The Structure of the image processing device

The computer 80 may be constructed with a computer including a CPU and capable of various kinds of image processings of arbitrary types, well-known for a person skilled in the art. Computer 80 controls the operations of the respective portions in the inventive feeble light measuring apparatus to acquire a microscopic image as image data, and also to perform the producing of a superposition image of an illumination image acquired in a transmitted light observation and a luminescence image acquired in a luminescence observation as well as various processings using the image data, such as the determination of an analysis region using the superposition image.

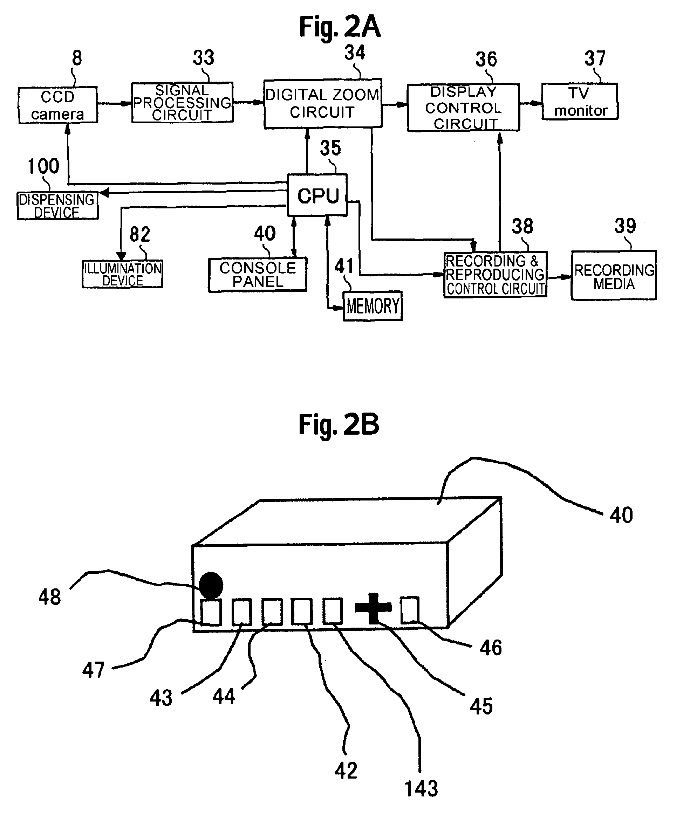

Fig. 2A represents the computer 80 in a form of a function block diagram. Referring to the diagram, the computer 80 comprises a CPU 35, a memory 41 storing a control program for controlling an operation of CPU35, a signal processing circuit 33 and a digital zoom circuit 34 for converting an image captured with the CCD camera 8 into an image data, a display control circuit 36 and a TV monitor 37 for displaying the image captured with the CCD camera 8, a recording and reproducing control circuit 38 and a drive of a recording medium 39 for recording and/or displaying on the TV monitor 37 the image captured with the CCD camera 8 and/or an image obtained therefrom through an image processing, and a console panel 40 for inputting a command of a user. On the console panel 40, as illustrated in Fig. 2B, there are provided various buttons, such as a reproducing button 43, a recording button 47, a shutter button 44, a zoom enlarging button 42, a zoom reducing button 143, a cross cursor button 45, and a mode switch 48, and thereby a user's command can be inputted to the computer 80 through the console panel 40 connected to the CPU 35.

In the above-described structure, a microscopic image of the sample 4 formed on the image sensor 7 of the CCD camera 8 is converted into an analog electrical signal, i.e., an analog image signal, by means of the image sensor. The resultant signal is then transmitted to the signal processing circuit 33 under the control of the CPU 35, where, for the image signal, an amplification process, a filtering process and/or any image processings, such as edge enhancement, are executed. Then, subsequently, the processed image signal is sent to the digital zoom circuit 34 (digital signal processing portion). The digital zoom circuit 34 executes an A/D conversion of the analog image signal from the signal processing circuit 33 to produce a digital image signal, and, after any digital processing, such as a gamma correction, depending upon its necessity, the resultant digital image signal is transmitted to the display control circuit 36 for displaying the image on the TV monitor 37 and the recording and reproducing control circuit 38 for recording the image data into the detachable recording media 39 (for example, a memory card, a hard disk, a magnetic disk, a magneto-optical disc, etc.) set in a memory slot (not shown). In this connection, the digital zoom circuit 34 in the inventive apparatus is designed to be capable of cutting out only an arbitrary region within the whole pixel region captured with the CCD camera 8, and transmitting the cut-out image region, while enlarging it at arbitrary magnification ratio, to a display control circuit 36 or the recording and reproducing control circuit 38. Consequently, displaying only a part of a microscopic image captured with the CCD camera 8 on TV monitor 37 with the part being enlarged and/or recording only the part become performable.

Moreover, in the above-described structure, the recording and reproducing control circuit 38 may be designed so as to read out a digital image signal currently recorded in the recording medium 39 in response to a reproduction control signal given from CPU 35, and the read-out digital image signal may be inputted through the display control circuit 36 into the TV monitor 37 so that the recorded image of the sample 4 can be displayed on the screen of the TV monitor 37.

In operation of the above-mentioned image processing device, when a user turns ON the recording button 47 on the console panel, the inventive apparatus executes a recording mode in which CPU 35 supplies a record controlling signal to the recording and reproducing control circuit 38. Then, the recording and reproducing control circuit 38, in response to the record controlling signal, records an image signal supplied from a digital zooming circuit 34 into a recording medium. On the other hand, when the reproduction button 43 is turned ON, the inventive apparatus starts a reproduction mode, in which CPU 35 supplies a reproduction control signal to the recording and reproducing control circuit 38, which displays an image data recorded as above on the TV monitor 37. Furthermore, when the mode switch 48 is set into an image capturing mode, a control signal from CPU 35 is outputted to the digital zoom circuit 34 in response to pushing on the shutter button 44, and one frame of image from the CCD camera 8 at that time is treated with the digital signal processing and incorporated into the memory 41. Then, the image data incorporated into the memory 41 is compressed by an arbitrary compression circuit and recorded on a memory card by means of a card reader / writer device.

The setting up of the cutting out, executed in the digital zoom circuit 34, of only an arbitrary region within the whole pixel region taken by means of the CCD camera 8 is done by using the zoom enlarging button 42, zoom contracting button 143 and cross cursor button 45. In the setting-up of the cutting out of an image region, "zoom centering position" showing the center of an image area to be cut out by the digital zoom circuit 34 is displayed as well as a frame of the image region on the TV monitor 37. A user is allowed to operate the cross cursor button 45 to set the zoom centering position at an arbitrary position while looking at the TV monitor 37, and also allowed to determine the size of the image region to be cut out, by means of the zoom enlarging button 42 and zoom reducing button 143. The magnification ratio of the image resulting from the cutting out process can be set freely within the range of M= 1.00 (the whole region captured by the CCD camera) to 4.00 (1/4 of the whole region captured with the CCD camera).

In this connection, the enlargement of an image as described above may be done by adjusting the optical system in the microscope (optical zooming), instead of the use of the digital zoom circuit 34. For example, such optical zooming is performed by shifting the focal distance between the CCD camera 8 and the second relay lens 18 along the optical axis by means of motor-driving of a stepping motor. Also, in the structure of lens (zoom lens) for performing optical zooming, the focal distance of the lens may be changeable in 10 steps manually or automatically, using a lens group of three variable powers, a compensation lens group performing aberration compensation etc. and a focal lens performing a focal adjustment (not shown). Driving the zooming lens may be executed such that a zooming motor (an ultrasonic motor etc.) mounted on the perimeter of the zooming lens operates based on the control signal outputted from CPU 35 to move the zooming lens along the optical axis.

Further, in order to control the operation of an automatic dispensing device 100 and an illumination device 82 (including a light source 2), the computer 80 may be connected with those devices so that acquiring an image signal captured by the CCD camera 8 can be performed synchronously with the execution of dispensing operation by automatic dispensing device 100.

### Observation and measurement of a sample by means of the apparatus of the first embodiment

As described above, in the measurement of a luminescence phenomenon of a luminescent protein, its luminescence intensity is so feeble that it is hardly detectable as a light signal with a CCD camera and an internal structure of a cell is usually unobservable. Accordingly, the focus of an objective cannot be adjusted while checking a cell to be observed in a sample as done in a normal observation with a microscope. Thus, the focus position of the objective in a luminescence observation is determined based upon an illumination image of a sample obtained in a transmitted light observation with the microscope in which the sample is illuminated with the light from a light source, such as a halogen lamp, through the optical system for illumination. For example, by setting the focal position of the objective to an approximate center position on the optical axis of the objective between two positions where a high contrast image is obtained in a transmitted light observation, a clear luminescence image focused on the CCD camera is obtained when the luminescence intensity of a bioluminescence protein is increased. Hereafter, the inventive method of imaging with luminescence of a luminescent protein using the above inventive apparatus will be explained about.

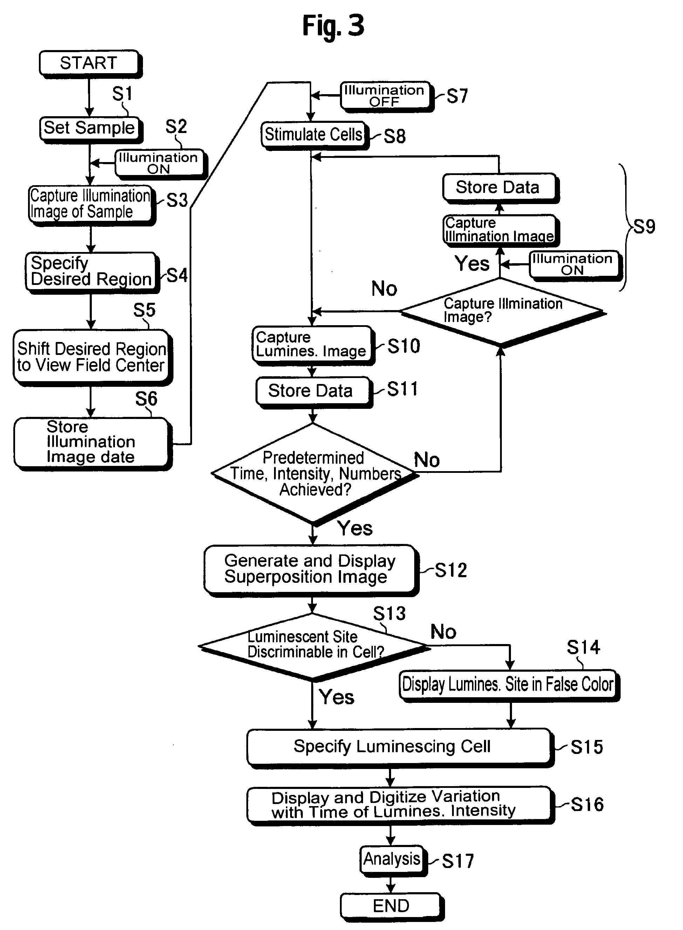

Fig. 3 shows processes in the inventive method of luminescence imaging in a flowchart form. Referring to the drawing, first, a sample 4 (cells, etc.) and a culture solution are put into a laboratory dish (sample container 21), which is then set in the apparatus (Step 1), and an illumination light is turned on (Step 2). Then, a microscopic image of the sample 4 passing through the objective 15 is formed on the light receiving surface of the image sensor 7 of the CCD camera 8, and the illumination image of the sample is obtained with the signal from the image sensor 7 (Step 3). Next, a desired region, i.e. a region having a suitable cell density is specified within the obtained illumination image (Step 4). After this, the stage is moved to shift the specified region having the suitable cell density to the center of a visual field (Step 5). Then, the data of the illumination image is memorized into a memory device (Step 6), and the illumination is switched off (step 7), and then the acquisition of a first illumination image is completed.

Next, in order to make luminescent protein expressed within cells in the sample, the cells are stimulated with a means for stimulating cells. The reagent for stimulating a cell may be fed with the automatic dispensing device (Step 8). In this regard, at this stage, an illuminating process may be done just after step 8, and the data of the resultant illumination image may be saved into the memory device (Step 9). Then, without illumination, a luminescence signal is acquired (Step 10) and saved into the memory device (Step 11), and thereby the acquisition of a first luminescence image is completed. Subsequently, Step 10 and Step 11 are repeated for acquiring luminescence images until a predetermined time, a predetermined luminescence intensity, or a predetermined number of times of execution of the processes is achieved. In this connection, these processes may be performed in a manner that the acquisition of an illumination image and acquisition of a luminescence image are paired, or alternatively, in a manner that one acquisition of an illumination image is performed for every predetermined number of times of executions of the acquisitions of luminescence images. These acquisitions of images may be performed in a pattern suitable for the mobility of cells, the term of the measurement, etc.

Then, after the completion of the acquisition of illumination images and luminescence images, a superposition image of an illumination image and a luminescence image is produced and displayed in the image processing device (computer 80) (Step 12). A luminescent cell can be determined by referring to the resultantly displayed superposition image of the illumination image and luminescence image, and accordingly, a certain cell can be specified easily even when it moves during measurement.

Next, whether a luminescent site in the cell can be distinguished in the superposition image or not is judged, and if a luminescent site can be distinguished (Step 13: Yes), a measurement region is specified (Step 15). The measurement region may be specified by means of arbitrary means on the monitor, such as a mouse, a cursor or a pointer, etc., which can define an area on the screen by manual operation, or by execution of an image processing in which a threshold is changed variously. For example, one cell may be specified as one measurement region, and a portion within a cell can also be specified as one measurement region.

On the other hand, when it is hard to distinguish a luminescent site in a cell (Step 13: No), a measurement region is specified after displaying the output from the CCD camera in false color (Step 14) so that the luminescence is rendered to be easily visible (Step 15). In this case, for example, one cell may be specified as one measurement region, and a portion within a cell can also be specified as one measurement region. In this connection, the specifying of a region may be conducted not only before the stimulating of an object to be analyzed, such as a cell, but also after the doing of it, and, based upon an illumination image or a luminescence image obtained after the stimulation, a region to be measured may be shifted to a region where an object enabling a suitable measurement exists. If a region having no, very feeble or very small luminescence at the stimulation has been selected, a region to be measured may be changed into a region in which an appropriate luminescence is detectable. Alternatively, among cells to be analyzed which have been feebly or non-, luminescent at a time of stimulation, a cell whose luminescence amount increases in response to the stimulation may be specified as an object to be analyzed, and subsequently, the detected object may be selectively tracked for data acquisition and analysis.

Furthermore, the variation with time of luminescence intensity may be displayed in animation, or digitized and shown in the form of a graph (Step 16). Then, finally, an analysis is executed (Step 17). In details, using the resultantly obtained data, comparison of a luminescence intensity of each cell, comparison of luminescence intensities in individual sites in one identical cell, determination of a luminescence pattern of a cell, comparison of a variation with time of a luminescence pattern, etc. are performed. From those results, it is possible to analyze conditions of responses of a cell to a reagent, electricity, gas, and thermal stimulation. In addition, it is also possible to analyze about cell activity in a case that no stimulation is conducted.

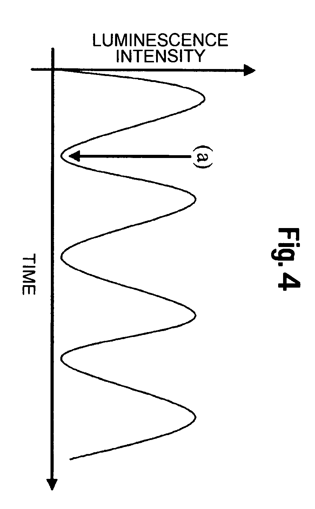

According to the use of the present invention, for instance, in observing a sample whose luminescence intensity fluctuates periodically as shown in Fig. 4, the change of the luminescence intensity of a desired cell can be observed, even if its luminescence disappears, without missing the cell concerned before and after the luminescence disappearance, so that it is possible to specify a certain cell and to continuously track its luminescence intensity.

### The second embodiment of the inventive apparatus

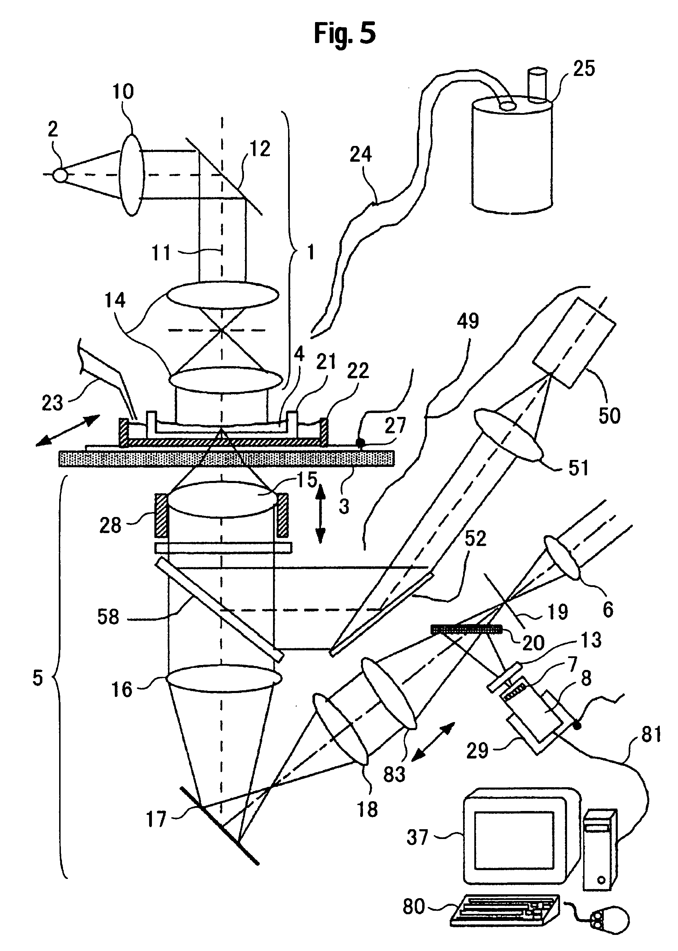

Fig. 5 schematically shows the second embodiment of the inventive apparatus in which a structure for performing a fluorescence observation is further added to the first embodiment of the inventive feeble light measuring apparatus as illustrated in Fig. 1.

Referring to the drawing, in the inventive apparatus of the second embodiment in which digital zooming and/or optical zooming are simultaneously performable similarly to the apparatus of the first embodiment, an optical system 49 for excitation light was added thereto, and further, the observation optical system 5 is modified so that fluorescence emitted from the sample 4 can be led to the CCD camera.

The optical system 49 for excitation is constructed with a excitation light source 50, a collimate lens 51, a deflection mirror 52, and a switchable dichroic mirror 53. The excitation light sources 50 are typically an argon laser having the output power of 10mW and the wavelength of 488nm. In this regard, the excitation light source 50 may be a gas laser of visible ranges, such as a helium neon laser. The laser light is converted into a circular parallel beam having a certain beam width with a collimate lens 51, reflected on a deflection mirror 52, and enters into the switchable dichroic mirror 58 installed in the observation optical system 5.

The switchable dichroic mirror 58 has a spectral characteristic of reflecting the light of the laser wavelength of a excitation light source 50 and passing therethrough the spectrum of the fluorescence and luminescence signals from the sample 4. Thus, the laser light having entered into the observation optical system 5 reflects on the switchable dichroic mirror 53, and subsequently enters into the objective 15 from its bottom, converges toward the sample 4 in the sample container 21 and excites fluorescence molecules in the sample 4. In this connection, the switchable dichroic mirror 58 is housed into a holder (not shown) and mounted exchangeably according to an oscillation wavelength of the excitation laser light. Further, if it is not necessary to change the wavelength of the excitation light source 50, a usual dichroic mirror may be secured instead of the use of the switchable dichroic mirror 58.

As for the objective 15, an objective of liquid immersion type having a high NA (numerical aperture) of, e.g., about 0.9 or 1.0 or more may be used. When the fluorescence signal and luminescence signal which have been emitted from the sample 4 and have entered into the objective 15 go through the observation optical system 5 of the apparatus, these signals penetrate through the switchable dichroic mirror 58, progress through the first relay lens 16 and the second relay lens 18 and reflects on the switching mirror 20, and finally form the respective images on the light receiving surface of the image sensor 7 of the CCD camera 8. Then, as in the apparatus of the first embodiment, the light signal from the CCD camera 8 is sent to a computer 80, in which the displaying and analysis of the luminescence image, the measurement with time and signal analysis of the luminescence intensity, etc. are executed and the results of the analysis is displayed on the screen of the TV monitor 37 of the computer 80.

The fluorescence observation may be performed in a manner known for one of ordinary skilled in the art. Fluorescent dyes used in the fluorescence observation, for example, may be rhodamine green (RhG); TMR (Tetramethylrhodamine) and 5-Tamra (5-carboxytetramethylrhodamine). For exciting TMR and 5-Tamra, etc., an argon laser with a wavelength of 514.5 nm and a helium-Ne laser with a wavelength of 543.5 nm, etc., may be used as the excitation laser light source, respectively. Moreover, FITC (Fluorescein isothiocyanate), TOTO 1, Acridine Orange, Texas Red, etc. may be used as a fluorescent dye.

### The third embodiment of the inventive apparatus

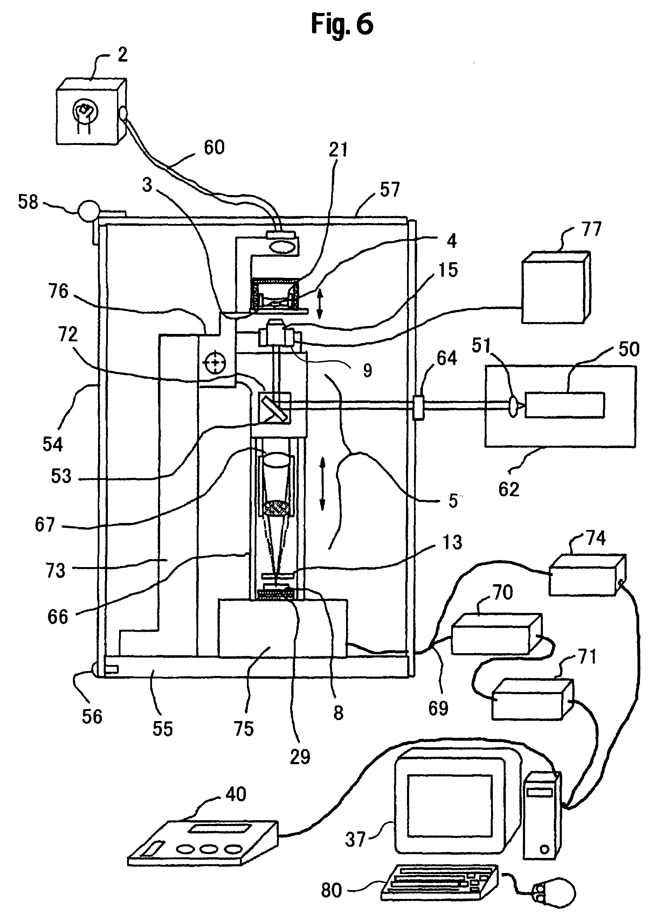

Fig. 6 shows a schematic diagram of another embodiment of the inventive feeble light measuring apparatus which is capable of a digital zooming or an optical zooming and a simultaneous measurement of fluorescence and bioluminescence as in the apparatus of Fig. 5.

Referring to the drawing, in this embodiment, the measuring device itself, i.e., the optical microscope, is enclosed in a light blocking box 54, wherein the bottom of the light blocking box 54 is secured on a bottom plate 55 by stops 56, and thereby the box is designed to prevent external light from entering into the observation optical system 5. On the upper surface of the light blocking box 54, a separate light-blocking lid 57 is attached, and one end of the light-blocking lid 57 is connected on the main body of the light blocking box 54 by a hinge 58, enabling the pivotal opening and closing of the light-blocking lid 57.

In order to acquire an illumination image, for example, the light from the light source 2 for the illumination, such as a halogen lamp, a metal halide lamp, etc., is introduced through an optical fiber 60 for the illumination onto an upper surface of the sample container 21 lying on the sample stage 3, and illuminates the whole of the sample 4. Further, in order to acquire a fluorescence image, a laser (excitation) light source 50 is secured in a light source box 62 outside of the main body of the apparatus, and the laser light exiting from the laser light source 50 enters through a laser incident opening 64 attached on the outer frame into the main body of the apparatus. The laser may be, for example, an argon laser having an output of 10 mW and a wavelength of 488 nm. The laser light which has entered into the apparatus body through the laser incident opening 64 first goes into an observation optical system, reflects on the switchable dichroic mirror 53, enters into the objective 15 from its bottom, and converges toward the sample 4 for illuminating it. The switchable dichroic mirror 53 is housed in a holder and mounted exchangeably according to an oscillation wavelength of the excitation laser light.

The sample container 21 is secured on the XY sample stage 3 with fastener pins. The XY sample stage 3 is designed such that its position on a XY plane can be moved arbitrarily with a rack-pinion mechanism in the XY plane. The objective 15 mounted under the sample container 21 is attached with a mechanism of driving the objective in Z-axis 9 so as to be movable along an optical axis (Z-axis). Through lead wire, the Z-axis objective driving mechanism 9 communicates with, and is controlled by, a focal point detecting portion 77 installed outside of the feeble light measuring apparatus.

In the observation optical system 5, the signal light collected with the objective 15 passes through the switchable dichroic mirror 53, and then, without deflection as seen in the above-mentioned first and the second embodiment, the signal light progresses through a lens 67 attached in the lower portion of a lens barrel 66 and is collected onto the light receiving surface of the CCD camera 8. The lens 67 is positioned in the lower portion of the lens barrel 66 fixed with fastener pins above a base mount 75 fixed on a bottom plate 55, and on the base mount 75, the CCD camera 8 is placed such that the focus position on the Z-axis of the lens 67 coincides with the approximate center of the light receiving surface. A main body base 76 carrying the sample stage 3 and the objective 15 is attached, movably up and down relative to the upper and lower portions 72 and 66 of the lens barrel, with a post 73 fixed on the bottom plate 55. In this connection, optionally, there may be provided an objective's focal point detecting portion 70, which is connected to a position detecting portion 71 so that the output signal from the position detecting portion 71 can be outputted to the TV monitor 37.

As for the CCD camera 8, since the light emitted from the sample is feeble, it is preferable that a camera having as a high sensitivity as possible is used, as in the first and the second embodiments. The number of pixels of the CCD camera 8 may be e.g. 1,360×1,024. In order to suppress the dark current emitted from the CCD camera 8, a cooling system 29 including a Peltier device is equipped in the bottom portion of the CCD camera to cool and maintain the temperature of the CCD camera 8 approximately at 0 °C. Above the light receiving surface of the CCD camera 8, an infrared cut filter 13 is provided to cut out infrared light which would be background light. However, when infrared light is to be taken out as signal light, the infrared cut filter 13 is removed from the lower portion of the lens barrel 66 before the measurement. The output portion of the CCD camera 8 is connected with a signal cable 69, and thereby, an image of the sample from the CCD camera is transmitted through a signal processing portion 74 to a computer 80, and displayed on the TV monitor 37. A 3 plate type color camera may be employed for the CCD camera 8 so that a colored illumination image can be obtained.

In operation, first, based upon an illumination image of the sample 4 with the light source 2 for illumination, the focus of the objective is adjusted to the sample. To do this, the objective 15 is moved along the optical axis by means of the Z-axis objective driving mechanism by adequate amounts, and in every step of its moving, the optical output signal from the CCD camera 8 is analyzed by the signal processing portion 74 for detecting a position on the optical axis of the objective 15 at which a high contrast image is obtained. Then, the two positions of the upper and lower sides on the optical axis of the objective 15 providing a high contrast image are found out, and through the calculation of the signal processing portion 74, an approximate center position between the upper and lower positions is determined as a focal position in a luminescence observation. After this, by operating the Z-axis objective driving mechanism 9, the objective 15 is moved and fixed to the resultant focal position, and subsequently, a fluorescence signal and a luminescence signal emitted from the sample 4 are received with the CCD camera 8.

In the Z-axis objective driving mechanism 9, a plurality of objectives 15 may be exchangeably attached. When an objective 15 of large magnification is used for observing a cell, etc. moving in a culture solution in the sample 4, it is possible in some cases that the cell, etc. of the sample 4 often moves out of the field of view owing the smallness thereof. Thus, preferably, the sample 4 is first observed with an objective 15 of low magnification, such as x10 and x20, and then, after the desirable position in the sample 4 is confirmed and specified with a mouse and a keyboard, the image is enlarged by the zoom-in function in the inventive apparatus. In this regard, a computer may be used as the signal processing portion 74.

For investigating the usefulness of the present invention, the following experiments were carried out. In this regard, it should be understood that the following examples are to illustrate the usefulness of the present invention and are not intended to limit the scopes of the present inventions.

### Example 1

In Example 1, using a feeble light measuring apparatus in which the measuring apparatus in Fig. 1 is provided with an automatic dispensing device 100, a luminescence, induced by a reagent stimulus, in a certain cell in a plurality of HeLa cells into which a luciferase gene had been introduced was temporally observed.

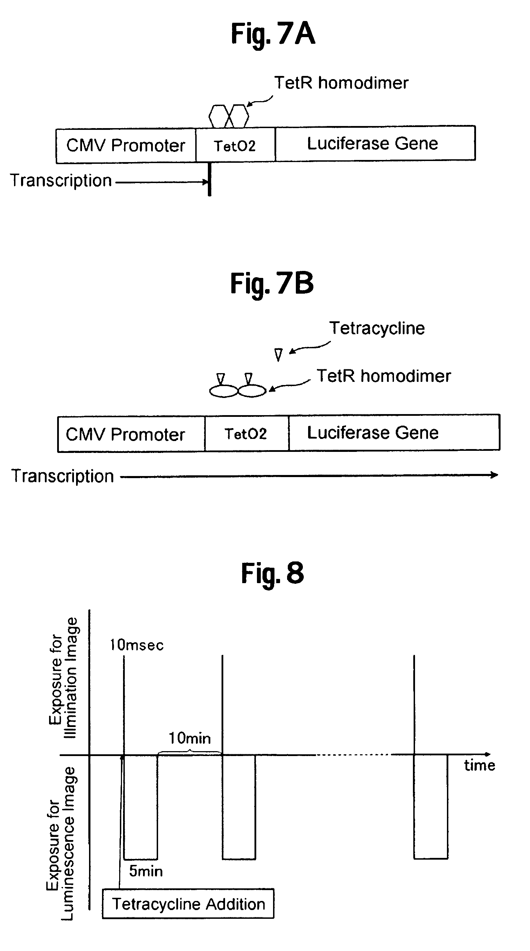

For the sample, HeLa cells in which a vector, "pcDNA6/TR (obtained from In vitro gene co.)" constantly expressing a tetracycline repressor (TetR), and a plasmid including a luciferase gene connected with an expression vector "pcDNA4/TO (obtained from In vitro gene co.)" having a tetracycline operator (TetO2) had been genetically transferred were used. In the cells into which these two genes have been introduced, as schematically shown in Fig. 7A, TetRs are first expressed with the vector (pcDNA6/TR) for TetR, and then, the TetRs form a homodimer, which combines with a TetO2 gene region, thereby suppressing the transcriotion of the luciferase gene connected to a TetO2 region. However, as schematically shown in Fig. 7B, tetracycline, when it is given to the cells (reagent stimulus), induces a conformation change of the TetR homodimer, leading to the detachment of the TetR homodimer from the TetO2 region, so that the transcription of the luciferase gene and the expression of luciferase proteins will be induced. Thus, in this experimental example, in a cell into which the above-mentioned genes had been introduced, it was observed that a stimulus with tetracycline caused the expression of luciferase and a luminescence phenomenon within the cell.

In the apparatus of Fig. 1, for the objective 15, Olympus UApo/340 (20x, N.A. 0.75) and a commercial objective for a microscope of "Oil, 20x, N.A. 0.8" or "5x, N.A. 0.13" were used. For the CCD camera 8, a 5 °C cooled, digital camera for microscopes, "DP30BW (Olympus)" was used. In this CCD camera, a CCD element (corresponding to the image sensor 7) was that of 2/3 inch type, whose number of pixels was 1360 x 1024 and the size of each pixel was 6 µ m square. The total magnification power of an image of a sample passing from the objective through the image-formation lens (relay lens) and formed on the CCD element was set to 4 times. During observation and image acquisition of the HeLa cells, the whole apparatus was covered with a dark box.

The experimental operations were carried out in the following procedures.
(1) There was prepared a sample of the HeLa cells in which a vector constantly expressing TetR and a plasmid including a luciferase gene connected with an expression vector with TetO2 have been co-expressed. For the culture medium, D-MEM culture medium containing 10mM HEPES, provided with 1mM luciferin, was used.
(2) Next, the sample in (1) was used for the sample, and illumination images and luminescence images were captured. The illumination images and luminescence images were captured always with being paired. The exposure time at one image acquisition (the integration time of the signal on the CCD camera) was set to 10 msec for an illumination image and to 5 min for a luminescence image.
(3) Subsequently, tetracycline was added to the sample to induce transcription of the luciferase gene therein, and immediately after the addition of the tetracycline, an illumination image and a luminescence image of the sample were captured with being paired as in the process (2).
(4) Then, as shown in Fig. 8, the image capturing of the process (2) was repeated at intervals of 10 min., for 10 hours. The image capturing processes were performed automatically with the computer processing, in which the light signals acquired with the CCD camera were automatically converted into digital data in the inventive apparatus.
(5) After completion of the image acquisitions, the acquired illumination images and luminescence images were superposed for determining HeLa cells expressing the luciferase. Then, the variations with time of the luminescence intensities of the HeLa cells expressing the luciferase were digitized and analyzed. When determination of a luminescent site of a HeLa cell was difficult in the superposition image, the output value from the CCD camera 8 was displayed in false color in order that a luminescent site could be easily recognized with human eyes.

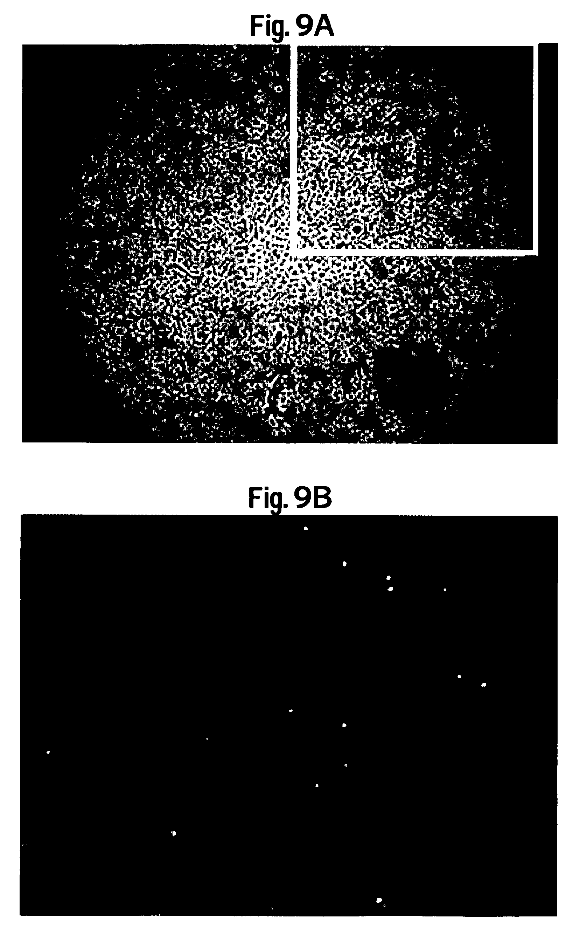

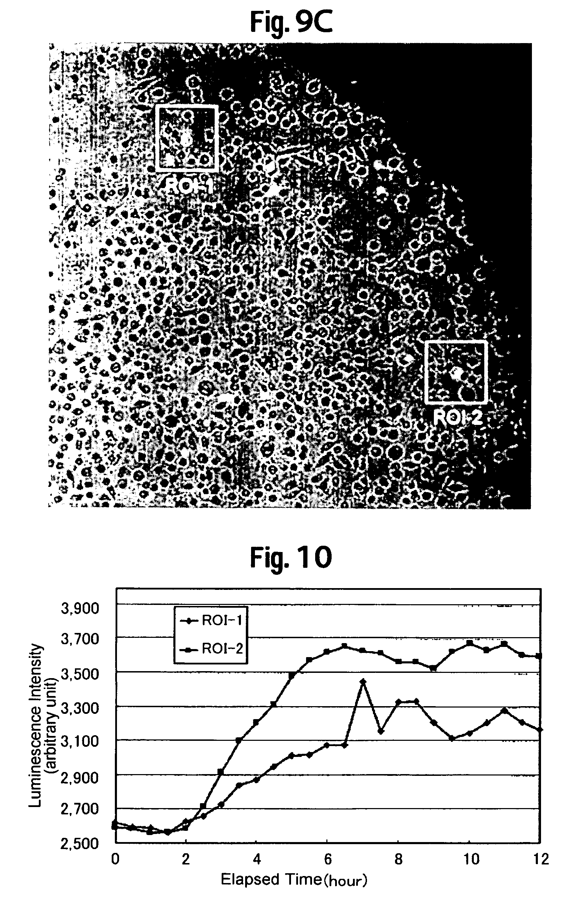

Figs. 9A, 9B, and 9C show an illumination image, a luminescence image and a superposition image, respectively. Fig. 10 shows the variations with time of the luminescence intensities in two cells within region ROI-1 and ROI-2, each surrounded in the square frames in the superposition image of Fig. 9C in the images obtained in the above-mentioned procedures. Accordingly, it has been shown that, according to the present invention, it is possible to determine which cell is luminescing and to measure the variation with time of its luminescence.

### Example 2

In Example 2, using the same apparatus as in Example 1, the luminescence observation of luminescent bacteria (P. phosphoreum) was performed, and the variation with time of the luminescence intensity by the reagent stimulus in a cell was monitored. Luminescent bacterium is a motile, luminescent organism which widely exists in nature in the forms of (i) an independently living organism in sea water, (ii) symbiosis within a luminescent organ of a fish or a cephalopod, (iii) proliferation in dead fish, animal flesh, (iv) habitual parasitism in digestive tube of a saltwater fish or epidermis of a cuttlefish, and the bacterium continuously exhibits strong luminescence enough to observe with eyes under an aerobic condition.

In observation, Olympus UApo/340 (40x, N.A.1.35) or Oil Iris "Oil, 40x, NA 1.35" was used for the objective 15. Other conditions for capturing images were the same as in Example 1.

The experimental operations were carried out in the following procedures.
(1) Luminescent bacteria, existing as symbiotic organisms within a luminescent organ of a firefly squid, were isolated and cultivated in LB culture medium including 3% NaCl. Glycerol was added to this culture medium to obtain 25% glycerol solution (v/v) at the final concentration.
(2) The sample in (1) was used for the sample, and illumination images (observed images) and luminescence images were captured. The illumination images and luminescence images were captured always with being paired. The exposure time at one image acquisition (the integration time of the signal on the CCD camera) was set to 10 msec for an illumination image and to 1 min for a luminescence image.
(3) Subsequently, using the automatic dispensing device 100, Ampicillin was added to the sample, inhibiting the cell wall synthesis in the luminescent bacteria. By this, the proliferation of the luminescent bacteria is to be suppressed, leading to the extinction of the bacteria. The addition of ampicillin was performed in a manner that the operation of automatic dispensing device 100 was synchronized with capturing images, where, immediately after addition of ampicillin, an image capturing was executed in which an illumination image and a luminescence image were paired.
(4) Subsequently, the image capturing as described in the above-mentioned process (2) was repeated at intervals of 5 min until one hour lapsed after addition of ampicillin. The image capturing processes were performed automatically with the computer processing, in which the light signals acquired with the CCD camera were automatically converted into digital data in the inventive apparatus.
(5) After completion of the image capturing, the acquired illumination images and luminescence images were superposed, from which the strongly luminescent bacteria were determined. Then, the superposition images were arranged in order of the times when the respective images were captured to be formed into an animation, and the changing of a luminescent position accompanying the movement of a luminescent bacterium was tracked, and the variation with time in the luminescence of the luminescent bacterium was digitized and analyzed. In this regard, the tracking of a luminescent bacterium may be performed automatically with computer processing.

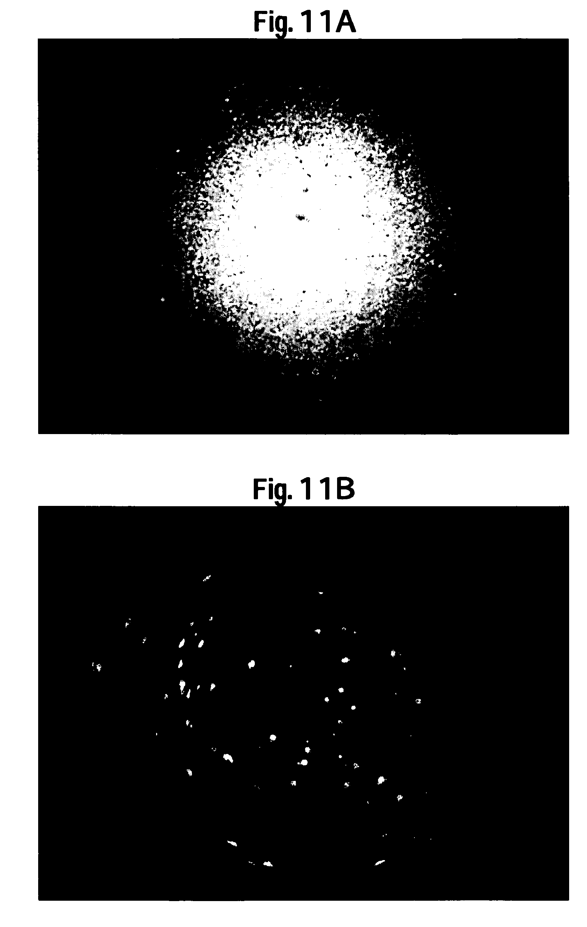

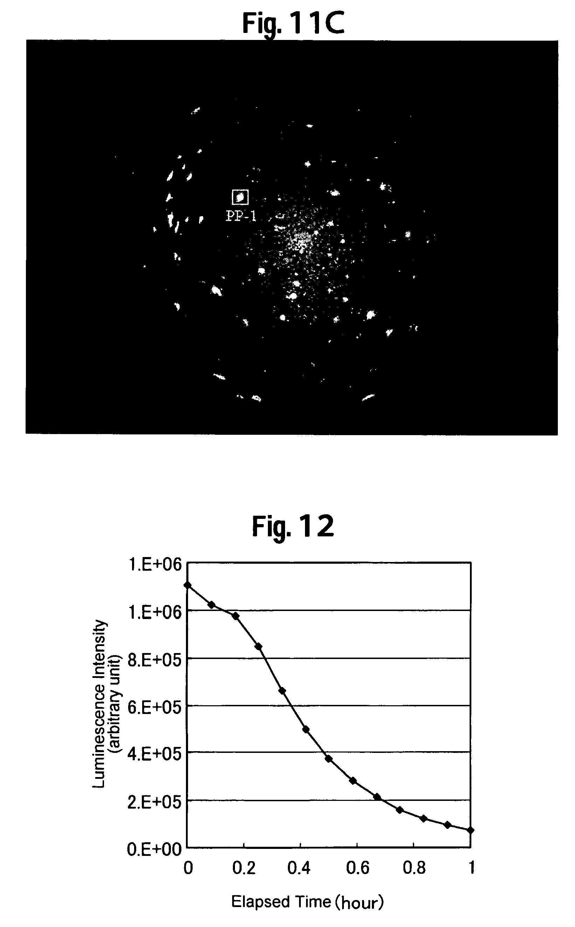

Figs. 11A, 11B and 11C show an illumination image, a luminescence image, and a superposition image (shown in false color), respectively. Fig. 12 shows the variation with time of the luminescence intensity of the luminescent bacterium in the region PP-1 in Fig. 11C. According to Example 2, it has been shown that, even when a microorganism, such as a bacterium, moves during measurements, it is possible to determine which microorganism is luminescing and to measure the variation with time of its luminescence.

### Example 3

In Example 3, the luminescence observation of luminescent bacteria (V. tischeri) was performed, in which the position of a luminescent bacterium and the variation with time of the luminescence intensity were tracked. The conditions in the image capturing were the same as in Example 2.

The experimental operations were conducted in the following procedures.
(1) Luminescent bacteria were cultivated on agar LB culture-medium plate including 3% NaCl, from which colonies whose luminescence intensity is high were sorted out and suspended in liquid LB culture medium including 3% NaCl.
(2) The sample in (1) was used for the sample, and illumination images (observed images) and luminescence images were captured. The illumination images and luminescence images were captured always with being paired. The exposure time at one image acquisition (the integration time of the signal on the CCD camera) was set to 5 msec for an illumination image and to 3 min for a luminescence image.
(3) Subsequently, the image capturing as described in the above-mentioned process (2) was repeated. The image capturing processes were performed automatically with the computer processing, in which the light signals acquired with the CCD camera were automatically converted into the digital data in the inventive apparatus.
(4) After completion of the image capturing, the acquired illumination images and luminescence image were superposed. Since the luminescent bacteria moved with time progress, the superposition images were arranged in order of the times when the respective images were captured to be formed into an animation, and the changing of a luminescence position accompanying the movement of a luminescent bacterium (V.t.) was tracked, and the variation with time in the luminescence of the luminescent bacterium was digitized and analyzed. In this regard, the tracking of a luminescent bacterium may be performed automatically with computer processing.

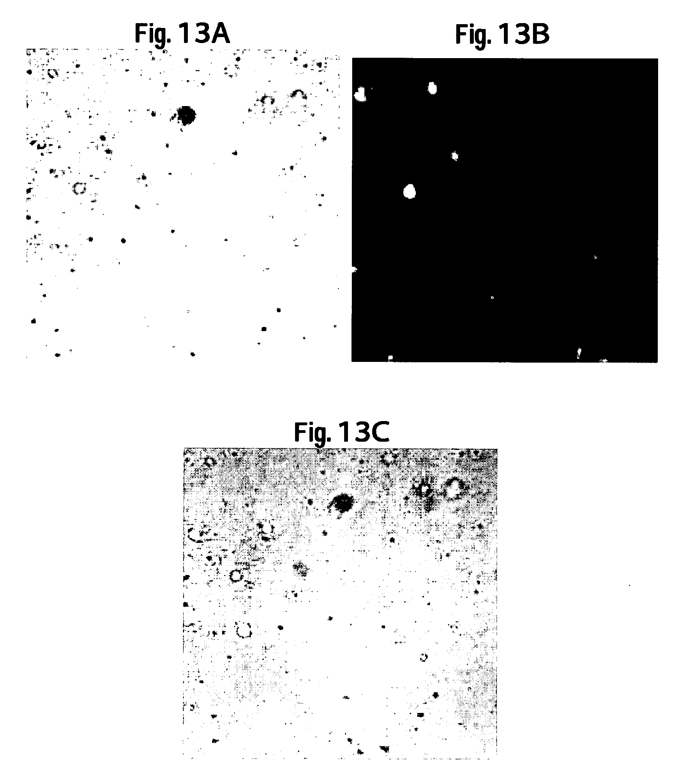

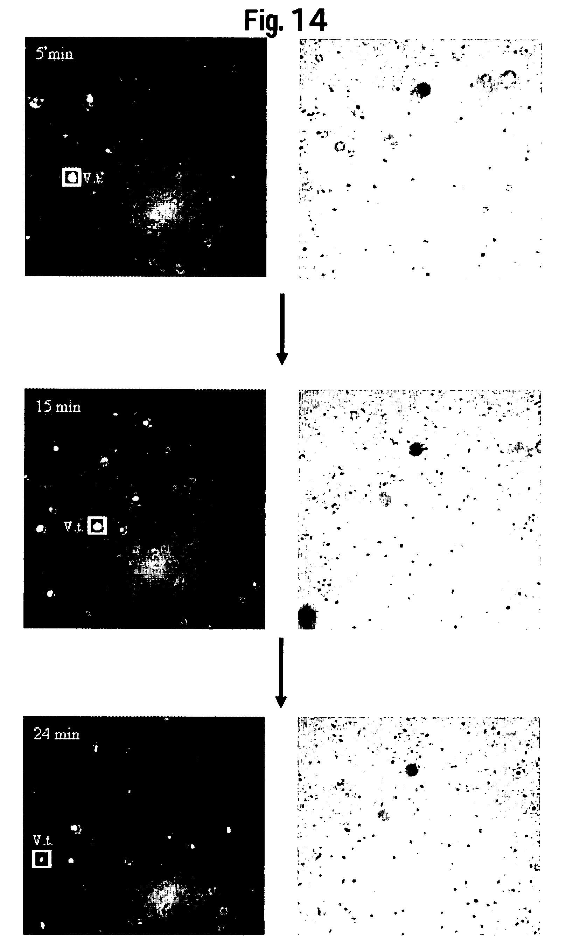

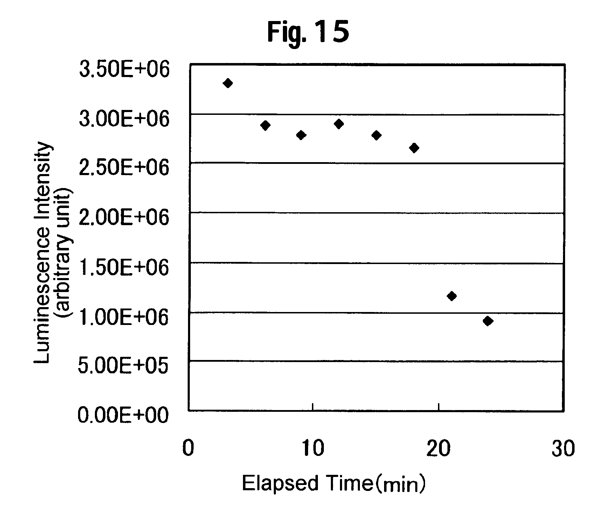

Figs. 13A, 13B and 13C are an illumination image, a luminescence image and a superposition image, respectively, and Fig. 14 shows that a luminescent bacterium moved with a time progress. Fig. 15 shows the variation with time of the luminescence intensity of the luminescent bacterium (V. t.). As shown in Example 3, the present invention enables the measurement of the variation with time of luminescence for a specified luminescent portion even when a microorganism, such as a bacterium, moves during the measurement. As seen, only by tracking a dynamic body, irrespective of presence or absence of stimulation, for example, ethological and/or cytological analyses (proliferation activity, etc.) will be available. Moreover, since the tracking of a dynamic condition of a bacterium is possible, the measurement of movement of a luminescent region in a sample is enabled irrespective of the presence or absence of stimulation.

Although the present invention has been described in detail with respect to particular embodiments, it will be apparent for those skilled in the art that other various embodiments are possible within the scopes of the present invention.

## Claims

1. An apparatus acquiring an image of a sample of biological origin with an optical image formation device, comprising an illuminating portion which illuminates the sample; an illumination image acquiring portion which acquires an illumination image of the sample, a luminescence image acquiring portion which acquires a luminescence image of a cell in the sample; an image processing portion which superposes the illumination image and the luminescence image to generate a superposition image, and determines an analysis region in the superposition image.

2. An apparatus of Claim 1, **characterized in that** the optical image formation device is an optical microscope; the illumination image is a transmitted light microscopic image obtained in a transmitted light observation with illumination light of the illuminating portion under the optical microscope and the luminescence image is a luminescence microscopic image obtained by observing light emitted by a luminescence phenomenon in the cell under the optical microscope; wherein the illumination image acquiring portion and the luminescence image acquiring portion comprise a common microscopic image capturing device which captures the transmitted light microscopic image and the luminescence microscopic image.

3. An apparatus of Claim 2, **characterized in that** the microscopic image capturing device has a light receiving surface and the optical microscope includes an objective and a lens assembly which form the images of the sample on the light receiving surface of the microscopic image capturing device, wherein a square value of a ratio of a numerical aperture of the objective to a magnification power of the image of the sample projected on the light receiving surface is 0.01 or above.

4. An apparatus of Claim 1 **characterized in that** the apparatus comprises a fluorescence image acquiring portion for acquiring a fluorescence image of the cell.

5. An apparatus of Claim 4, **characterized in that** the optical image formation device is an optical microscope; the fluorescence image is a fluorescence microscopic image obtained in a fluorescence observation of the sample under the optical microscope and the luminescence image is a luminescence microscopic image obtained by observing light emitted by a luminescence phenomenon in the cell under the optical microscope; wherein the fluorescence image acquiring portion and the luminescence image acquiring portion comprise a common microscopic image capturing device which captures the fluorescence microscopic image and the luminescence microscopic image.

6. An apparatus of Claim 1 **characterized in that** the apparatus comprises a display portion which displays the superposition image.

7. An apparatus of Claim 1 **characterized in that** the apparatus comprises a recording portion which records the superposition image.

8. An apparatus of Claim 1 **characterized in that** the apparatus comprises a cell stimulus feeding portion which stimulates a cell.

9. An apparatus of Claim 8, **characterized in that** the cell stimulus feeding portion is at least one selected from a group consisting of a reagent feeding portion which supplies a reagent to the cell, a temperature adjustment portion which adjusts a temperature of the sample and a gas feeding portion which supplies gas to the cell.

10. A method of acquiring an image of a sample of biological origin by means of an optical image formation device, **characterized in that** the method comprises the steps of:
illuminating the sample and acquiring its illumination image;
acquiring a luminescence image of light emitted by a luminescence phenomenon of a cell in the sample without illuminating the sample;
superposing the illumination image and the luminescence image to generate a superposition image; and
determining an analysis region in the superposition image.

11. A method of Claim 10, **characterized in that** the method comprises a step of displaying the superposition image.

12. A method of Claim 10, **characterized in that** the method comprises a step of recording the superposition image.

13. A method of Claim 10, **characterized in that** the step of illuminating the sample and acquiring the illumination image is performed two or more times.

14. A method of Claim 10, **characterized in that** the method comprises a step of giving a stimulus to the cell prior to the steps of acquiring the illumination image and the luminescence image.

15. A method of Claim 14, **characterized in that** the method comprises a step of acquiring the illumination image and the luminescence image prior to the step of giving a stimulus to the cell.

16. A method of Claim 14, **characterized in that** the stimulus given to the cell in the step of giving the stimulus to the cell is at least one of stimuli selected from the group consisting of a reagent stimulus, an electric stimulus, a stimulus by gas and a stimulus by heat.

17. A method of Claim 10, **characterized by** further comprising steps of: measuring a light intensity of a region in the luminescence image corresponding to the analysis region, and displaying a variation in the light intensity.

18. A method of Claim 10, **characterized in that** the method comprises a step of acquiring a fluorescence image of the cell in the sample.

19. A method of Claim 18, **characterized in that** the method comprises a step of displaying at least two regions among a region in the illumination image corresponding to the analysis region; a region in the luminescence image corresponding to the analysis region; and a region in the fluorescence images corresponding to the analysis region.

20. A method of Claim 10, **characterized in that** the optical image formation device is an optical microscope; the illumination image is a transmitted light microscopic image obtained in a transmitted light observation under the optical microscope and the luminescence image is a luminescence microscopic image obtained by observing light emitted by a luminescence phenomenon in the cell under the optical microscope; wherein the transmitted light microscopic image and the luminescence microscopic image are captured with a common microscopic image capturing device.

21. A method of Claim 20, **characterized in that** the microscopic image capturing device has a light receiving surface and the optical microscope includes an objective and a lens assembly which form the images of the sample on the light receiving surface of the microscopic image capturing device, wherein a square value of a ratio of a numerical aperture of the objective to a magnification power of the image of the sample projected on the light receiving surface is 0.01 or above.

22. An apparatus of acquiring an image of a sample of biological origin comprising an optical microscope, a microscopic image capturing device which captures a microscopic image of the sample observed with the optical microscope, and an image processing device which takes in the microscopic image as an image data and executes image processing, wherein the image processing device comprises an image superposing portion which generates a superposition image by superposing a transmitted light image obtained by capturing an image of the sample in a transmitted light observation of the sample under the optical microscope with the microscopic image capturing device and a luminescence image obtained by capturing light emitted by a luminescence phenomenon in a cell in the sample under the optical microscope with the microscopic image capturing device; and an image region specifying portion which specifies an analysis region in the superposition image.

23. An apparatus of Claim 22, **characterized in that** the microscopic image capturing device has a light receiving surface and the optical microscope includes an objective and a lens assembly which form the images of the sample on the light receiving surface of the microscopic image capturing device, wherein a square value of a ratio of a numerical aperture of the objective to a magnification power of the image of the sample projected on the light receiving surface is 0.01 or above.
